Europäisches Patentamt

(19) European Patent Office

Office européen des brevets

(11) Publication number: **0 100 502**
**A1**

(12) **EUROPEAN PATENT APPLICATION**

(21) Application number: **83107246.7**

(22) Date of filing: **23.07.83**

(51) Int. Cl.³: **G 01 D 5/242**
**G 01 P 3/44, G 01 R 29/18**

(30) Priority: **03.08.82 GB 8222422**

(43) Date of publication of application:
**15.02.84 Bulletin 84/7**

(84) Designated Contracting States:
**DE FR GB**

(71) Applicant: **Merck Patent Gesellschaft mit beschränkter Haftung**
**Frankfurter Strasse 250**
**D-6100 Darmstadt(DE)**

(72) Inventor: **Lawrence, Thomas Frederick**
**24, Rowney Gardens**
**Sawbridge Herts(GB)**

(72) Inventor: **Cooper, John David**
**9 Chesterfield Avenue**
**Benfleet Essex(GB)**

(54) **A sensor.**

(57) A sensor for detecting the state of motion of an armature in a magnetic field. The sensor comprises a solenoid coil responsive to motion of a magnetic field eminating from the armature to produce a signal, which is then isolated by filtering the total output signal of the solenoid.

This sensor can be adapted to provide alarm signals to indicate when the speed of the armature has dropped below an acceptable level e.g. in a magnetic stirrer. Alternatively, the sensor may be employed in a viscosity and/or precipitation determining/monitoring device.

EP 0 100 502 A1

Croydon Printing Company Ltd.

- 1 -

## A SENSOR

The present invention relates to a sensor for detecting the state of motion of an armature in a magnetic field, for example, that of a rotor in a motor system in which the rotor is driven by means of electromagnetic pulses supplied by a plurality of solenoid coils. Such a rotor may be integral with or external to the solenoid coils.

An example of one such motor system is to be found in magnetic stirrers employed in laboratories for stirring liquids by means of a magnetic follower located in the liquid and activated into rotation by an externally generated rotating field. If, for example, the material being stirred should throw down a precipitate or increase its viscosity, this may either prevent the stirring action of the follower or possibly throw it completely out of the influence of the controlling magnetic field. In many instances, this could lead to the creation of a dangerous chemical situation.

Thus, it is desirable that the rotational status for the follower should be constantly monitored. However, up till now, this could only be done by visual observation. This can be both inconvenient and time consuming. Further it has prevented such stirring operations being carried out in opaque vessels, e.g.

- 2 -

stainless steel beakers, where the stirring action would not normally be visible, or at remote locations such as inside pressure vessels, ovens or baths.

An object of the present invention is to provide a sensor for detecting the state of motion of an armature in a magnetic field.

Thus, according to the present invention, there is provided a sensor for detecting the state of motion of an armature in a magnetic field, the sensor comprising a solenoid coil responsive to motion of a magnetic field eminating from the armature to produce a signal, filtering means for isolating at least a portion of this signal from the total signal output of the solenoid and output means for divulging information regarding the signal isolated.

In one embodiment of the present invention, the solenoid coil is that coil, of a plurality of sequentially activated coils for producing a rotating magnetic field, which, at any moment in the sequence, is temporarily non-activated. In a further embodiment, it is those two, of four sequentially activated coils, which, at any moment in that sequence, are non-activated, which are responsive to the motion of the magnetic field of the armature to produce said signal.

In an alarm system comprising the sensor of the present invention, comparing means are provided for comparing the signal isolated with a threshold value, the output means producing, for example, an audible signal,

- 3 -

should this threshold value not be reached. The threshold value is preferably produced by a sensitivity control circuit which monitors the current in the solenoid coil and produces a threshold value signal which varies with the resistance of the coil so as to compensate for variations in its output signal due to changes in its temperature.

In a device for determining/monitoring the viscosity of and/or precipitation in liquids comprising the sensor of the present invention, the signal portion isolated is compared with a signal representing the magnetic field acting on the armature in the liquid to extract behavioural information concerning the viscosity of or precipitation in the liquid being stirred. This device usefully avoids the mechanical and/or electrical constraints normally encountered in this type of shear viscometry. A preferred system of this kind is adapted to analyse the information obtained from sensing a magnetic follower which is moved in a periodic reversing mode and presents different surface profiles in its forward and reverse modes of motion (e.g. streamline in one direction and bluff in the other) and for example, comparing the signals isolated for the forward modes with those corresponding signals obtained in the reverse mode.

The present invention will now be described with

- 4 -

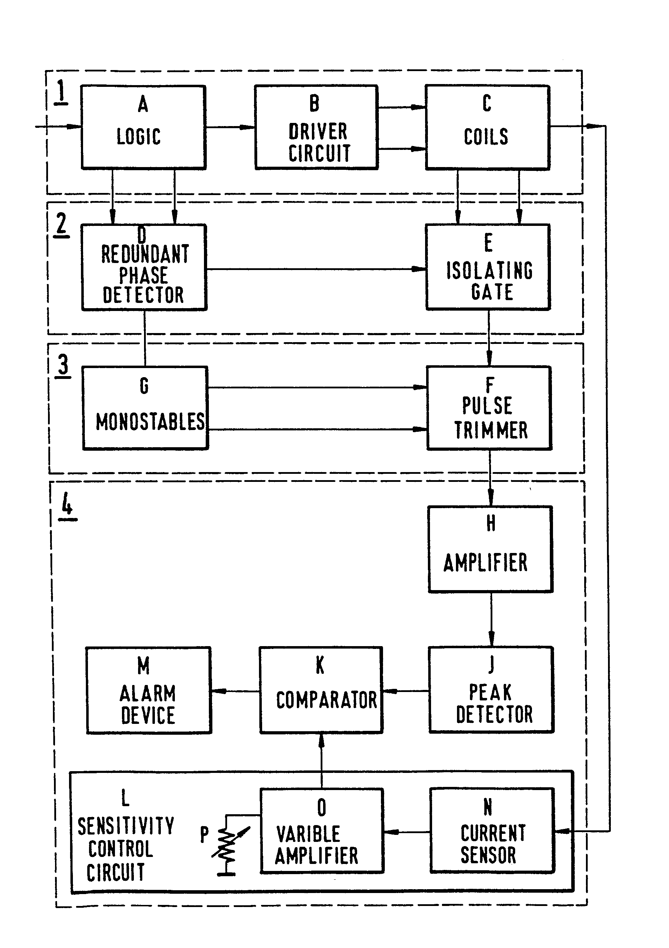

reference to the accompanying drawing , in which an embodiment of a sensor is shown connected to the circuit of a typical bench magnetic stirrer.

A bench magnetic stirrer circuit comprises three or more solenoid coils which are activated in sequence to produce a rotating magnetic field in which a magnetic follower is entrained.  In the drawing the main operating stages of a bench magnetic stirrer circuit 1 are represented by blocks A, B and C.  A logic circuit A receives speed control impulses from an external oscillator or multi-vibrator and decodes these impulses into an operating sequence signal which sequentially activates the solenoids C via a driver circuit B.

In this embodiment, a sensor comprises a gating circuit 2 for selecting information from that coil or those coils temporarily non-activated by the driving circuit B, a filter circuit 3 for selecting from the gating circuit output signal, a portion which eminates from the magnetic field of the magnetic follower, and a signal analyzing and indicator circuit 4 for obtaining information from the signal portion obtained and divulging this information.

The gating circuit 2 comprises a redundant phase detector D and an isolating gate E.  The redundant phase detector D obtains information from the logic circuit A as to the operational status of the solenoid coils C and

- 5 -

supplies this information to the isolating gate E.  The isolating gate E uses this information to reject the coil driving signals from that obtained from the coils C. Thus, the signal passed by the isolating gate E is solely produced by the current induced in the non-activated coil or coils as a result of a changing magnetic field appearing in the activated coils and of movement of the magnetic follower.  The changing magnetic field occurs in the activated coils at the beginning and end of each activation pulse and therefore appears in this signal principally at the beginning and end of each pulse.  Thus, this signal is passed from the isolating gate E to a pulse trimmer F, while the remnant coil energy is discharged via a discharge network (not shown).

In addition to the pulse trimmer F, the filter circuit 3 comprises a pair of mono-stable delay timers G which are triggered in accordance with the frequency of driving coil activation and send signals to the pulse trimmer F to determine the portion of the period of each pulse arriving from the isolating gate E which is to be transmitted to the analysis circuit 4.  Thus, the mono-stables G and pulse trimmer F redefine the signal from the isolating gate E and thereby remove the spurious portion of each pulse produced by changes in the magnetic field of the activated coils, to leave a signal which eminates from the current induced by movement of the follower.

This signal is then amplified in amplifier H and is passed to a peak detector J which supplies a comparator K with a voltage level output based on the mean value of this amplified signal. This voltage is dependent on the magnetic field strength (or suscepta-bility) and speed of the follower, of which the former of these two values is predetermined. The voltage signal is compared with a threshold voltage signal from a sensitivity control circuit L and activates an alarm device M when the rotationally induced signal falls below the threshold value indicating that the follower is stationery or is moving too slowly and/or is out of the influence of the controlling magnetic field.

The sensitivity control circuit may simply comprise a potentiometer which is manually adjusted according to the specific conditions of the system. However, in this embodiment the sensitivity control circuit L is adapted to provide for temperature compensation. During operation of the coils C, their temperature progressively rises and with it their resistance. Thus, for a specific voltage, the current passed decreases with the temperature. If the apparatus is to be operated for any length of time, the level of the voltage signal supplied by the peak detector J to the comparator K will decrease and if no compensation were provided to reduce the threshold signal by a proportional amount, acceptable follower conditions would be indicated as unacceptable, thereby making unacceptable conditions indistinguishable.

In the present embodiment, the sensitivity control circuit L comprises a current sensor N which detects the current flowing in the activated coils to produce a signal which is amplified by a variable amplifier 0 to produce the threshold value which is supplied to the comparator K. Thus, as the temperature of the coils rises, and hence the current produced in the coils falls, the threshold value supplied to the comparator decreases. The amplifier 0 is provided with a sensitivity control P e.g. a potentiometer, for setting the level of amplification in dependence on the specific system conditions, such as, for example, the magnetic field strength of the magnetic follower, the liquid to be stirred, the material of the vessel in which the liquid is contained, and the sensitivity of monitoring required.

In a further embodiment of the present invention, the current sensor N is also used in the manner of a thermostat, to detect and set the temperature of a hot plate located above the coil C on which the vessel containing the liquid to be stirred rests.

CLAIMS

1.  A sensor for detecting the state of motion of an armature in a magnetic field, the sensor comprising a solenoid  coil responsive to motion of a magnetic field eminating from the armature to produce a signal, filtering means for isolating at least a portion of this signal from the total signal output of the solenoid and means for divulging information regarding the signal isolated.

2.  A sensor as claimed in any preceding claim, wherein said solenoid coil is that coil of a plurality of coils activated in sequence to produce a rotating magnetic field, which, at any moment in that sequence, is temporarily non-activated.

3.  A sensor as claimed in any preceding claim, wherein two of four solenoid coils sequentially activated to produce a rotating magnetic field, are responsive to the motion of the magnetic field of the armature to produce said signal, which two coils are those which, at any moment in the sequence, are temporarily non-activated.

4.  A sensor as claimed in claim 2 or 3 further comprising gating means connected to said solenoid coils for selecting and supplying to the isolating means only those signals which originate in a non-activated coil.

5.  A sensor as claimed in claim 4, wherein said gating means comprises an isolating gate connected to the output of the coils and a redundant phase detector which supplies information as to the activation state of the solenoid coils to said isolating gate.

6. A sensor as claimed in claim 4 or 5, wherein said filtering means comprises a pulse trimmer which passes only a portion of the period of each pulse signal arriving at its input from the gating means in dependence on the frequency of activation of the coils.

7. A sensor as claimed in claim 6, wherein the filtering means further comprise a pair of monostable delay timers which are triggered in accordance with the frequency of coil activation and supply signals to the pulse trimmer to determine that portion of the pulse signals which are to be passed.

8. A sensor as claimed in any preceding claim wherein means are provided for analysing the signal isolated in said filtering means.

9. A sensor as claimed in claim 8, wherein said analysing means comprise comparing means for comparing the signal isolated with a threshold value.

10. A sensor as claimed in claim 9, further comprising sensitivity control circuit for supplying said comparing means with a threshold value signal whose magnitude varies with the conductivity of the solenoid coil responsive to motion of the magnetic field of the armature.

11. A sensor as claimed in claim 10, wherein the sensitivity control means comprise a coil current sensor and a variable amplifier.

12. A sensor as claimed in any of claims 9 to 11, wherein said comparing means comprise a peak detector which produces a voltage level output based on the mean value of the signal isolated and supplies this output to a comparator for comparison with the threshold value signal.

13. A sensor for detecting the state of motion of an armature in a magnetic field substantially as herein described with reference to the accompanying drawing.

14. An alarm device comprising a sensor as claimed in any preceding claim wherein an alarm indicator is activated when the signal isolated drops below a specific value.

15. A device for determining/monitoring the viscosity of and/or precipitation in liquids comprising a sensor as claimed in any one of claims 1 to 8.

16. A device as claimed in claim 15, wherein means are provided for comparing the signal isolated with a signal representing the magnetic field acting on the armature in a liquid to extract behavioural information concerning the viscosity or precipitation condition of the liquid being stirred.

- 11 -

17.  A device as claimed in claim 15, wherein the armature presents a streamline profile in forward motion and a bluff profile in reverse motion and further comprising comparing means for comparing the signals isolated for forward motion of the armature in a liquid with those isolated for reverse motion of the armature.

## European Patent Office

## EUROPEAN SEARCH REPORT

| | DOCUMENTS CONSIDERED TO BE RELEVANT | | EP 83107246.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - A1 - 2 657 154 (CAIN) <br> * Claim 1 * <br><br> -- | | G 01 D 5/242 <br> G 01 P 3/44 <br> G 01 R 29/18 |
| A | DE - A1 - 2 752 681 (SYNCHRO-START PRODUCTS) <br> * Claim 1 * <br><br> -- | | |
| A | DE - A1  2 816 009 (PHILIPS) <br> * Claim 1 * <br><br> ---- | | |

|  | TECHNICAL FIELDS SEARCHED (Int. Cl. ³) |
|---|---|
|  | G 01 D 5/00 <br> G 01 P 3/00 <br> G 01 R 29/00 <br> G 05 D 13/00 |

The present search report has been drawn up for all claims

| Place of search | Date of completion of the search | Examiner |
|---|---|---|
| VIENNA | 30-09-1983 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82